# EUROPEAN PATENT SPECIFICATION

(11) **EP 3 337 314 B1**
(45) Date of publication and mention of the grant of the patent: **29.09.2021**
(21) Application number: 15901796.1
(22) Date of filing: 17.08.2015
(51) Int. Cl.: A01K 61/00

(54) **METHOD AND DEVICE FOR SUPPLY OF WATER TO A CAGE, AND AN OVERFLOW DEVICE**
VERFAHREN UND VORRICHTUNG ZUM ZUFÜHREN VON WASSER ZU EINEM KÄFIG UND EINE ÜBERLAUFVORRICHTUNG
PROCÉDÉ ET DISPOSITIF POUR FOURNIR DE L'EAU À UNE CAGE, ET UN DISPOSITIF DE TROP-PLEIN

(43) Date of publication of application: 27.06.2018
(73) Proprietor: Vangen, Knut, 5114 Tertnes (NO); Vangen, Vidar, 5032 Bergen (NO)
(72) Inventor: Vangen, Knut, 5114 Tertnes (NO); Vangen, Vidar, 5032 Bergen (NO)
(74) Representative: Acapo AS
(86) International application number: PCT/NO2015/050136
(87) International publication number: WO 2017/030442

(56) References cited:
- WO-A1-97/38573
- WO-A1-2010/099590
- WO-A1-2014/000102
- WO-A1-2014/123427
- US-A1- 2010 224 136

## Description

The present invention relates to a method for the operation of a closed cage for marine organisms in the sea, where the cage is defined by a watertight cloth that is fastened in a floating anchoring ring on the sea surface, in that the cage is supplied with new water being pumped in from the sea, and water is let back out into the sea outside the cage via an overflow for the operation of a farming cage as can be seen in the introduction of claim 1. Furthermore, the invention relates to a new device for a cage construction in a closed cage to supply new water to the cage from the ocean depths underneath the cage as given in the introduction of claim 9.

The present disclosure also provides a device for an anchoring ring for the anchoring of a closed cage for marine organisms in the sea, where the cage is defined by a watertight cloth that is fastened to the anchoring ring on the sea surface, as the cage is supplied with new water being pumped in from the sea and water is let back into the sea outside the cage via an overflow. Meant by organisms in this connection are marine animals such as fish and shellfish, etc.

The invention concerns closed cages placed in the sea and where the cage bag is formed by a watertight cloth material. One aims for a float construction intended to carry/hold the cloth that makes up the cage bag, and to provide a controlled overflow to let water from the inside of the cage flow out through openings in the float and into the open body of water. In particular, the float construction is intended for closed cages when it comes to letting water out via an overflow, while its construction for the fastening of the cage cloth itself can be used for suspension of cage nets that allow a through-flow.

It is aimed to combine the inventive construction for water collection and the new cage floats in a new system for operation of a farming cage, although these can be applied independently on their own.

Watertight cages, where new water is taken up from the sea depths in an open body of water and where the water runs out again into the sea with the help of overflow pipes, are previously known. Furthermore, it is well known that wastes such as faeces, uneaten feed pellets and dead fish that sink down into the bottom of the cage are brought up to the surface again via dedicated waste lines for a responsible waste treatment which is a minimum requirement for the fish farming installations of today.

With regard to prior art, the following patent publications are referred to in the present context: WO 2014/000102, US 2010/0224136, US-4.798.168, WO 97/38573, and WO 2014/000102.

According to a first aspect of the invention defined in claim 1, the method discloses that the new water is pumped up from the sea by the operation of a pump house that is placed in a pipe-formed body connected to the bottom of the cage, and the water is led out into the cage some distance above the bottom of the cage and the water is let out via an overflow through a number of channels that are formed in the anchoring ring from the inside of the cage to the sea at the outside of the anchoring ring.

According to a preferred embodiment, the water is taken up into the pump house at or below the bottom of the cage via an inlet pipe that extends some distance down into the sea underneath the cage bottom. The water is preferably led upwards through the pump house and out into the cage in a radial direction some distance above the cage bottom, via a radially (arch-shaped) directed outlet from the pump house that is aligned with a correspondingly formed opening in the pipe-formed body.

According to yet another preferred embodiment, the water in the cage is forced into a rotary movement in that the new water out from the pump house and the pipe is directed towards arch-formed guiding flaps fitted at the outlet of the pipe.

The new water is pumped up through at least two mutually parallel pump houses with pumping bodies arranged in their respective guiding pipes, each one containing its respective pump house, and is led out into the cage in radially opposite directions.

During operation of the cage, the water level inside the cage is preferably held at a level higher than the water level outside the cage, as the water is let out by overflow through a number of overflow channels that are arranged across through the anchoring ring that encompasses a ring-formed float.

According to yet another preferred embodiment, each pump house comprises one or more chambers with buoyancy elements, such as air or lightweight foam, so that the pump house has an approximately neutral weight or negative buoyancy in its associated guiding pipe.

According to yet another preferred embodiment, each pump house is set up to be fitted suspended in a line with the help of a winch on the sea surface for the lowering down in (hoisting up from) its respective guiding pipe that runs up to the sea surface.

According to yet another preferred embodiment, the pump house is lowered down until it rests on a shoulder-formed receiving seat in the pipe, whereupon the pump motor is started so that the whole house turns/rotates freely on the seat until it meets a stopper body that locks the rotation of the house, in said position the outlet from the house is aligned with the outlet opening of the pipe lying outside.

The construction in combination with a cage according to the invention is defined in claim 9 such that the construction comprises a pump house with a removable pumping body, and comprises
a lower pipe part set up to extend down underneath the cage and comprises an inlet for intake of water,
an upper pipe part set up to extend upwards above the water surface in the cage as the pipe part comprises an outlet for the water that is pumped up from the sea underneath the cage, and
a middle section that connects the upper and lower pipe parts, respectively, and comprises a bracket for anchoring to the bottom section of the cage.

The upper house part is divided into at least two mutually channel-forming parallel pipe sections with associated radially directed outlets for the bringing of the water from the respective pump constructions inserted in the pipe sections out into the cage, said outlets face mutually radially opposite out into the cage.

According to a preferred embodiment, the pump house is divided into three parts:
1) an upper chamber part that acts as a float chamber and also a body for connection of a hoisting line that is operated by a winch on the sea surface for the hoisting/lowering of the housing,
2) a middle section that defines an arch-shaped pipe bend (47) that is set up to turn with its opening facing radially outwards, and also a downward open pipe part that is level with the downstream outlet from a water pump, and
3) a pump section with a pumping body and a downwardly open channel for fluid connection with the lower pipe part.

The bracket that connects the upper and lower pipe parts preferably encompasses a box-formed collective container that forms a fastening point for the bottom part of the cage cloth, one or more chambers with associated downflow channels for waste, and also a line for waste to lead the waste to the surface, and possibly a buoyancy chamber.

It is preferred that the lower pipe part is a pipe-formed flexible cloth that encompasses a weight at the bottom and the cloth pipe is held taut with the help of a number of rings of plastic or metal fitted mutually spaced apart internally in, or externally on, the cloth pipe, and also an inlet grid, and the top side of the bracket forms an inclining ring-formed shelf surface that is aligned with the downwardly arch-formed inside of the cage cloth so that it forms a natural tilting duct down towards the downward flow channels centre for the waste that sinks down.

The device for the anchoring ring for the anchoring of a closed cage for marine organisms in the sea, where the cage is defined by a watertight cloth that is fastened in the anchoring ring on the sea surface, as the cage can be supplied with new water and the water is let back into the sea outside the cage via an overflow, is characterised in that the anchoring ring is a ring formed float that comprises a number of overflows for water arranged across the anchoring ring around the whole of its circumference, and the float is composed of a number of float sections that define an extended, approximately closed, channel for the anchoring of a first extended body to which the cage cloth is fastened, hanging down under the float sections around the cage circumference.

According to an embodiment not according to the invention, each float section is divided into two part floats that can be separated vertically lengthwise and be put together to form said float section, and in each of the two opposite side surfaces of the two part floats a longitudinally running, half-circle formed recess is formed so that a longitudinally running, circle-formed channel is created for the closing in and anchoring of the extended body with the cloth fastened on.

The extended body is preferably a rod or a pipe of metal or plastic. Furthermore, it is preferred that an extended body that runs around the whole of the cage circumference through the float sections is anchored in a corresponding second channel formed by half-circle formed recesses in the two opposite side surfaces of the two part floats, and the body is placed vertically over the channel that anchors the cage cloth via the first extended body.

It is particularly preferred that the number of overflows is formed by channels that run across through each float section. Each channel in a float section preferentially defines an inclining, downwardly running channel from the inside which then turns vertically through the float section to the outlet in the water outside the cage.

According to yet another embodiment not according to the invention, the two float parts are held together with the help of a number of tightening rods (with threaded couplings) running through adapted, crosswise running borings through the float parts, and/or with the help of straps or bands that are put in place and tightened around the sections.

The invention shall now be explained in more detail with reference to the enclosed figures, in which:
Figure 1 shows a perspective of a farming installation with a floating cage 10 coupled to a frame construction and where the construction for the collection of water is shown.
Figure 2 shows a cross-section of the cage according to figure 1.
Figure 3a shows an enlarged cross-section of the new pipe-formed pump construction according to the invention, including its new construction for removal of waste that sinks down inside the cage.
Figure 3b shows a plane outline of an inlet grid on the pump house pipe with non-return flaps 53.
Figure 4 shows a side outline section of the pipe with the outlet 48b.
Figure 5 shows a perspective of the two assembled pipes 46a,46b that run from the inside of the cage to the sea surface.
Figure 6 shows the inlet pipe that runs down underneath the bottom of the cage.
Figure 7 shows a perspective of an outline of the ring-formed float construction.
Figure 8 shows a cross-section of a section of the float to indicate its two-part assembled form.
Figure 9 shows an outline of how the cloth can be coiled up on the extended body/pipe.

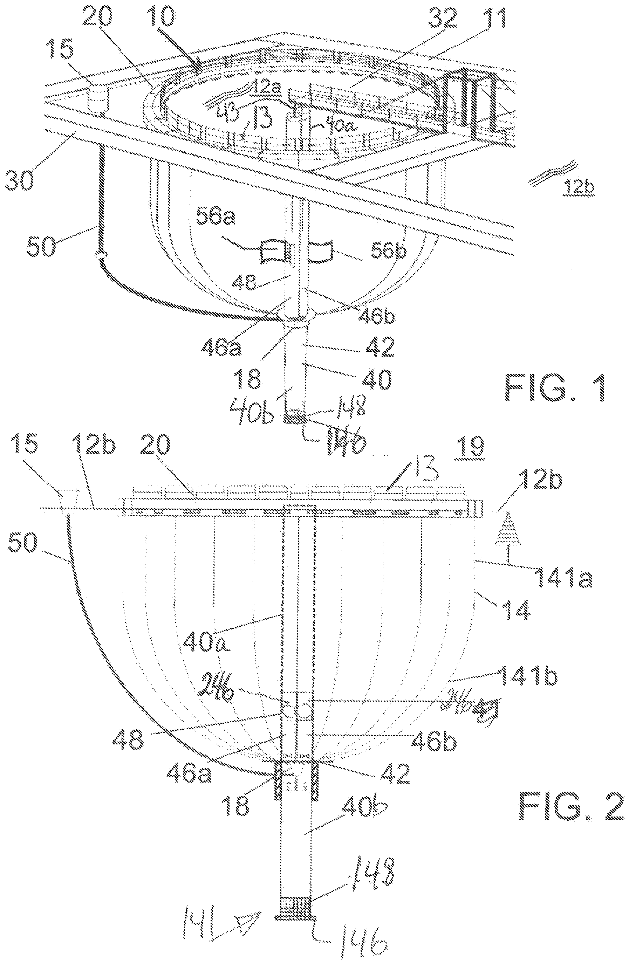

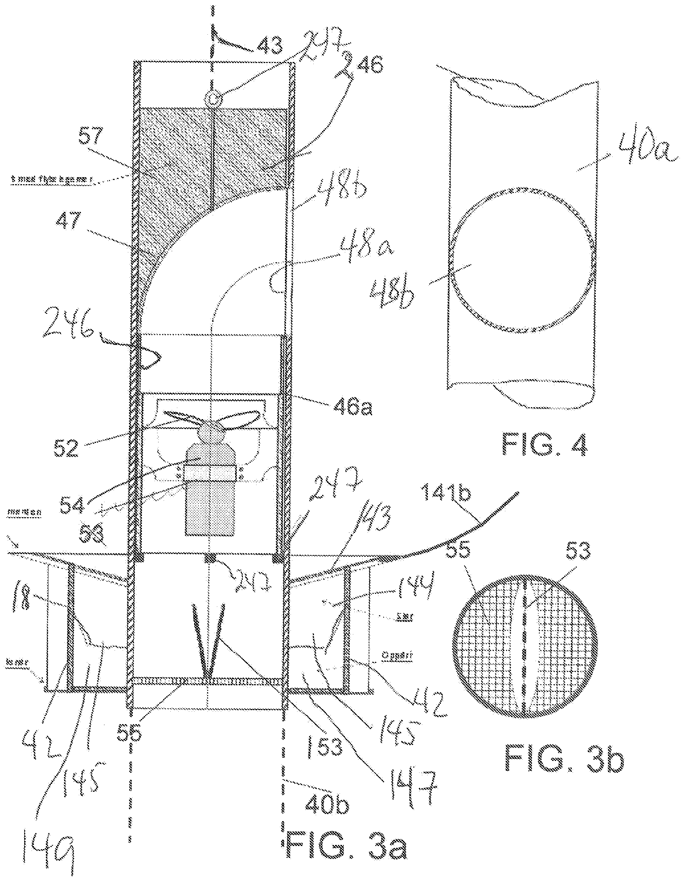

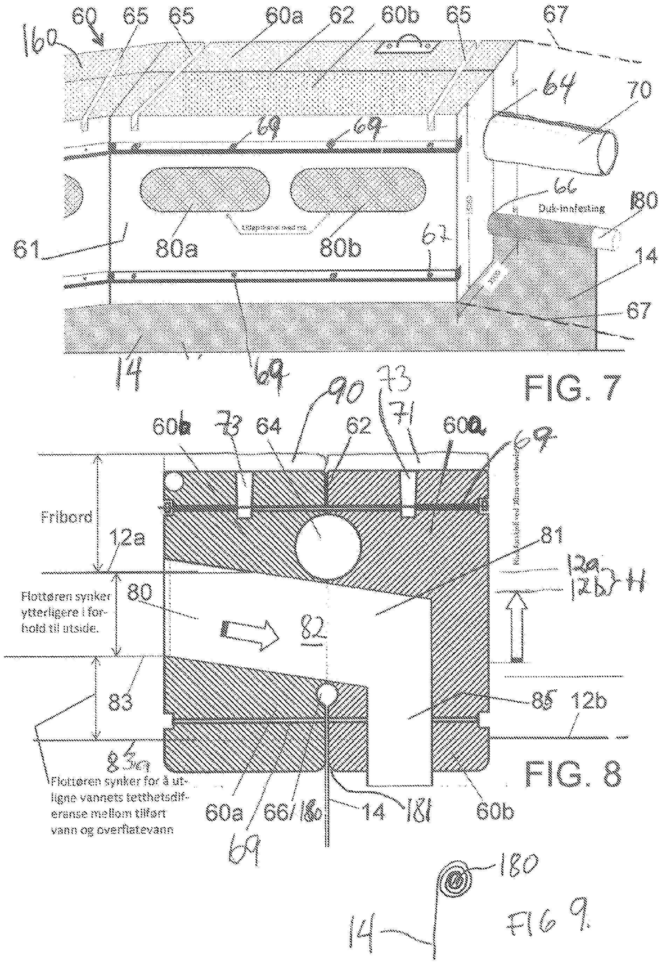

Initially, the invention shall be explained in more detail with reference to figure 1 which shows a cage installation with a cage 10 that is kept floating in the sea 12b (the sea surface) in that it is connected to a ring-formed float or pontoon 20. The cage installation encompasses a ring-formed floating frame 30 that holds each cage 10 by its floats 20 in the correct position. The whole cage installation can be comprised of a number of such cell-formed floating frame constructions 30 for positioning of a corresponding number of cages 10 with floats 20 that can carry the gangways, including a railing 11, for manual inspection and control of the installation, cf. figures 7-8. In figure 1, a ramp 32 with a railing is also shown, which rests on the frame 30 and which extends out over the water surface 12a inside the cage to about the middle of the cage. The ramp is for monitoring of the operation of the cage and comprises a winch (not shown) for the servicing of a line 43 (wire/chain/hawser) figure 3a in which hangs a pump house 246 with a water pump 54 with propeller blades 52 and which is submerged, one inside each pipe 46a,46b (see below).

The cage 10 is comprised of a watertight, reinforced cloth 14, which is well known, and the upper ring-edge of which is fastened to the ring-formed float 20. How the top ring-edge of the cloth 14 is fastened to the float shall be explained below in connection with figures 7 and 8.

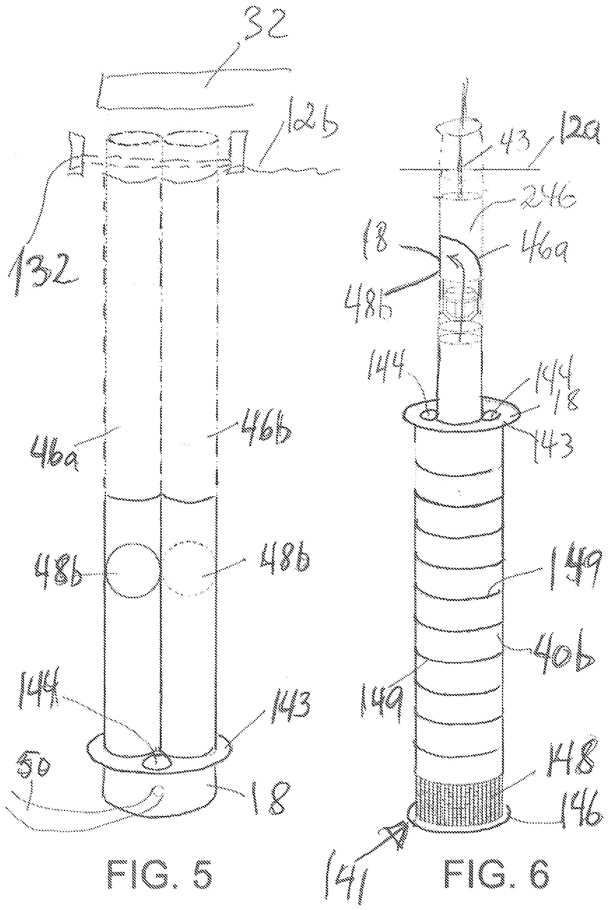

As shown in figure 2, the ring-formed wall part of the cage 10 tilts vertically downwards, shown by 141a, with a cylindrical shape in figure 2 to form an arch-shaped 141b - a bowl-form - (see also figure 3a) that tilts inwards towards a bottom - midpoint to a funnel-formed bottom section. This form is a preferred embodiment of the cage construction of the invention. The bottom section with a fastening bracket 18 constitutes, according to a preferred embodiment, a fastening point for an extended pipe-formed house 40a that largely extends vertically all the way up to above the water surface 12a shown in figure 1. As shown in figures 1 and 5, this pipe is preferably a bisected pipe construction, each part of which can contain its own pump 54, as will be seen in the following.

The pipe continues under the bottom bracket 18 of the cage over into a flexible pipe/hose section 40b that extends a distance downwards in the sea underneath the cage bottom.

The cage bottom is fastened to the bracket 18 which further comprises a box-formed collective container 42, the topside of which forms a tilted ring-formed shelf surface 143 that is aligned with the downwardly running arch-formed inside 141b of the cloth so that it forms a natural duct towards the centre for the waste that sinks down, as mentioned above. A number of channels 144 run down into a bottom part 145 of the container 42. A hose or pipe 50, with an associated pump for bringing the waste up to the sea surface 12b, runs from a bottom part 145 of the container 42 and to, a not described in detail installation 15, for treatment of the waste. Figure 5 shows two pipes 46a,46b that extend up to the sea surface. The bracket box forms a ring-formed underchamber underneath the bottom part 145, which is filled with air or comprises buoyancy means so that the whole construction of upper and lower pipes and also the bracket give the suitable weight load to the cage.

Figure 5 also shows the symmetry of the bracket 18, that when the construction comprises two pipes 46a,46b that run up to the surface, there are also two containers 144 for the waste that sinks down arranged diametrically opposite. If three pipes run up to the surface, there are also three containers 144 around the circumference, a container and a pipe alternately around the circumference.

The pipe 40b that runs down into the body of water can be a pipe or a hose. According to a preferred embodiment, cf. figure 6, the pipe 40b comprises a pipe-formed, flexible cloth which comprises a weight at the bottom in the form of a weight ring 146 that stretches the cloth pipe 40b downwards in the sea. Furthermore, the cloth pipe 40b is held taut with the help of a number of plastic or metal rings 149 that are fitted mutually spaced apart inside in, or outside on, the pipe, i.e. all the way from the bottom 141 and up to the bracket 18 in the cage bottom. Furthermore, the cloth pipe 40b comprises at the bottom an inlet grid, in this case in the form of a pipe-formed grid 148 that prevents larger particles, such as fish or other contaminants being pumped into the pipe 40b. The grid can also constitute a part of the weight ring 146, as a flat, horizontal grid.

The two pipes 46a,46b run up above the water surface 12b (figure 5) and run freely up lying extending up into a square frame 132 connected to the ramp 32 so that the pipes can be moved up and down in the vertical direction, but can be controlled, or limited in the sideways directions by the square frame. The frame can comprise inwardly facing horizontal rollers (not specifically shown) around the circumference and which the pipes 46a,46b can lie against so that they easily glide up and down for the cases where there is a relative movement between the square frame/ramp 32.

With the help of the pump construction 246 (see below), new water is brought up from the sea depths, firstly through the pipe 40b and then further up through the pump to be let out again into the cage through a radially directed outlet opening 48b (figures 3-4) in the wall of each respective pipe 46a,46b. The water is let out again via a natural overflow from the watertight cage to the free surrounding body of water, through especially formed channels that are integrated in the float construction 20 according to the invention (figures 7-8).

Each of the pipes 46a,46b (see also figure 5) is set up to internally lower down a pump construction 246 comprising a separate pump house with a fitted pump 54 and propeller blades 52 so that the underside is lying down towards the stoppers adjoining the bottom section 18 of the cage.

### Construction of pump house 246 for bringing new water up to the cage.

The two parallel pipes 46a,46b shown in the figures 5-6, extend up and into the cage body, cf. figure 3a. The pipes 46a-b are joined together so that the outlets 48a,48b with associated grids, face diametrically the opposite way so that when they pump out water the horizontal position 46 is balanced inside the cage 10. A shoulder-formed receiving seat 247 is fitted internally down towards the bracket 18 and which the underside of the pump house 246 (i.e. one pump house in each pipe) rests on when it is lowered down in the pipe 46 hanging on the line 43.

A cross-section through the pump house 246 is shown in figure 3a and is divided into three parts:
1) an upper chamber part 57 with a float effect, either as an air-filled chamber or a chamber filled with foam or another lightweight material. The upper part 57 also comprises a hook 247 for connecting to the line 43.
2) A middle part defines an arch-formed pipe bend 47 that turns with an opening 48a radially out into the inner body of water of the cage, and downwards an open section that is aligned with the outlet from the pump 54.
3) The pump section itself is the lower pipe section that holds the pump 54 with a propeller fan that pulls/sucks up water from below and pushes it upwards and out through the radially directed outlet 48a.

The outer dimensions of the pump house 246 are adjusted to the internal dimension of the pipe 46 so that the house 246 can be lowered down in the pipe.

The pump 54 can be an electrically or hydraulically driven motor. Below each pump 54, each pipe 46 encompasses an inlet grid 55 to prevent large solid particles from entering the pump house which could damage the propeller blades in the pump. Also fitted are non-return flaps 53 (figures 3a,3b) which, during the pumping, are flipped up by the upward flow of water and hold the inlet open, but which fall down and close the inlet with the grid 55 when the pumps stop the flow of water. Thereby, water can not flow out again the opposite way through the pipe 46 and run the risk of emptying the cage of water. Furthermore, figure 3a shows the line 43 fastened to the pump house stopper and which runs up to the ramp 32 above the surface of the water (figure 1), and with which the pump house 246 is lifted up and lowered down.

Figure 1 shows that each upwardly extending pipe 46a,b comprises arch-shaped guiding plates 56a and 56b, respectively, on the outside, which forms an arch in a vertical plane out from the two respective outlets 48a,48b, for the purpose of turning the water that flows out to set up a rotating movement in the cage, i.e. that the water is forced to flow in an approximately tangential direction so that the body of water inside the watertight cage is forced to set up a rotating stream.

It is necessary to have two separate pump systems a and b in operation at the same time, as with only one pump the water supply to the cage stops if the pump fails, something which is very unfortunate or unacceptable for the operation of the cage. This can also be solved in that a common pipe part comprises two independent, obligatory driven propeller pumps 54 and where the common pipe downstream (above) of the propellers is divided into two parallel, separated pipe branches with their outlets directed diametrically opposite as shown in the figures 1 and 2. The system will still function satisfactorily with only one pump operating. The flaps can also be seen in figure 1. This solution can also be carried out with one single pump, but is least favourable in case of the motor stopping.

At the same time, a pump house 246 with a defect pump 54 can simply be hoisted up to the sea surface and quickly be replaced with a new pump construction to be lowered down in the pipe, while the other pump operates as normal and drives the system.

With a suitable predetermined ballasting of the chamber 57, one can regulate the weight load of the pump house on the cage bottom. The pump house is preferably ballasted at 57 so that it takes some of the load of the pump 54 itself, but not more than that the pipe-formed house rests securely on the shoulder seats 247 with a given suitable weight. This means that the construction 246 has a suitable, low negative buoyancy.

When the pump house 246 is lowered down and the pump 54 starts the whole pipe 246 is subjected to a rotating force, so that the whole house will turn/rotate freely if there was no stopper body that stops this movement (cf. the theory of action and reaction). The brackets 247 shown in figure 3a comprise such a stopper body (not shown specifically), that limits the rotation of the pump 54 to a position that automatically ensures that the arch-formed bend 47 with the opening 48a will be aligned with the opening 48b in the pipe 46 lying outside. Thereby, the pump house 246 can be lowered down in the pipe with an arbitrary position as it will turn itself into the correct position as the pump 54 starts.

As figures 1 and 2 show, the pipes 46a,46b are fastened to the bottom bracket 18 of the cage 10 or constitute a part joined onto the bracket 18. While the lower pipe part 40b with its special cloth-form extends downwards in the sea to a suitable depth for the intake of new water, the upper pipe 40a runs up to the sea surface 12a.

### Construction for overflow ― draining from a closed cage with a watertight cloth.

As this cage system is based on closed cages with a watertight cage cloth, the draining of the water from the cage takes place by an overflow, through a specially formed channel system in the ring-formed watertight frame part which the cage cloth is suspended from. In known embodiments for watertight cages of this type, the cage cloth is readily extended up above the surface of the water so that a water level 12a is set up inside the cage that lies higher than the body of water 12b outside, and where the cloth comprises a number of channels through which the water can flow straight out into the sea. See also the water level indication in figure 8.

The ring-formed frame according to the invention is preferably composed of a number of mutually connected float sections that also comprises a new construction for the suspension of the cage cloth by a fastening at its top edge.

This construction is shown in the figures 7 and 8 which shall hereby be described in more detail.

The float 20 is a ring-formed construction that defines the horizontal extension of the cage. It is composed of a number of box-formed float sections 60,160 that are mutually coupled together to form the ring-form. Each section 60 comprises either a straight main section where the ends are cut at an angle for the formation of the ring-form, a circumference. Alternatively, each section can have a basic arched shape so that they form the ring-form around the whole circumference when the put together.

Furthermore, each float section 60 forms composed of two float halves 60a,60b that can be mutually separated vertically which between them both defines a fastening mechanism for the cage cloth and also a channel from the inside to the outside functioning as an overflow channel for water in the cage.

With regard to its normal float position in the sea, the float 60 is sectioned vertically shown by the section line 62. In each of the side surfaces that are put together two longitudinally running half-circle recesses are formed so that two longitudinally running circle-formed channels 64 and 66 respectively are defined mutually spaced apart when the parts 60a,60b are put together.

The lower channel 66 (seen in the floating position) is set to anchor an extended body (for example, a metal rod, and preferably an extended pipe) 180 to which the upper edge of the cage cloth 14 is fastened. The cloth 14 can be fastened to the pipe 180 in that it is coiled up a number of times on the pipe180 and then joined to the pipe by suitable fastening means (not specifically shown). When the two float halves are placed next to each other with the pipe 180 and the fastened cloth 14 jammed-in the channels 64, the cloth and the extended body (the pipe) remain securely anchored and it can be seen that the cloth hangs downwards from the body 180 and is jammed-in between the lower opposite surfaces of the two float halves. If necessary, for example, if the cloth is thick, these surfaces can be ground down so that they form a groove 181 between them to provide space for the jammed-in cloth part with a suitable jamming-in effect.

The two float parts 60a,60b are held together, or are screwed together, with the help of a number of threaded rods 69 with associated tightening nuts, running through adapted crossways borings through the float parts. As the figures 7 and 8, show used as an example is four upper and four lower crossways tightening rods 69 to hold the two float parts 60a,60b together. The sections can also be held together with the help of straps or bands that are put in position and tightened around the sections in adapted recesses in the sections around the circumference, or both parts.

To hold the float sections 60,160 together in a complete ring form, a second extended body, such as a metal rod or a pipe 70 that runs around the whole cage circumference, is correspondingly anchored in the above mentioned channels 64 that are placed vertically above the channel 66 that anchors the cage cloth 14 itself via the pipe 180. This pipe 70 can be of a common plastic, it can be a hollow plastic pipe so that it contributes to the buoyancy of the float or a metal rod. It can also be a wire or similar line. The dotted lines shown by 67 in figure 5 indicate the direction for the next float 60 in the row around the circumference.

Two adjoining float sections are held together and stabilised in that they are threaded onto the upper connected pipe 70 and the lower pipe 180 that anchor the cloth 14.

The top surface of the float 20 forms the basis for a frame for a gangway 90 (only shown in figure 8) in the construction of a trussed frame that comprises crossways rail parts set up to be stabilised in corresponding crossways rails 65, for example, two pieces (figure 7) in the top side of each section. The rails comprise downwardly extending legs that can be stabilised in corresponding recesses in the top surface, shown by 73 in figure 8. It also comprises a railing 13 as shown in figures 1 and 2.

### The overflow channel or duct.

Figure 7 shows a complete float section 60 fitted together with an adjoining section (only parts of this are shown). A grid is placed a distance up on the inner wall side 61 of the float 60 above the entry of two separated overflow ducts in the form of overflow channels 80a,80b. These openings can be regulated with the help of sliding bulkheads that can adjust the height of the threshold with the channel floor that follows the grid / sliding bulkhead up and down. When they are pushed upwards the overflow edge is raised. A vertical section of the one channel is shown in an outline of the two joined float parts 60a,60b in figure 6. The channel runs from the inlet 80 at the grid 81, according to a non-limiting example, through the float section 60a in an inclining, downwardly directed channel 82 to turn vertically, as shown by 85, through the float section 60b to the outlet in the body of water outside the cage. How the channel through each float part is formed can be varied. As water is pumped in all the time into the cage, it has a higher water level 12a than the water level outside 12b so that it is the overflow H that ensures that water flows through the deflected channels 80,82,85 around the whole circumference and out into the sea at the same rate as the pumping in.

If the pumping in of the water stops, the water level inside the cage will sink until the water level reaches the overflow edge 83.

It is schematically indicated on the left in figure 8 that the float characteristics change as the water is pumped into the cage. The bottom line shows the basic float position as a consequence of the weight of the float and railing. The water that is pumped up from the water depths and fills the cage has a higher density (is heavier) than the water at the sea surface, so that as the water level 12 inside the cage gradually rises, the float sinks downwards. The next level shows that the float sinks further at a higher level of water with respect to the level 12b outside. The text "Fribord" (freeboard) in figure 8 shows the setting of the cage in the sea at normal operation. The large arrow to the left indicates the level difference 12a vs. 12b that can, for example, constitute a height difference of 10 cm.

As the inlet at the overflow channel 80 lies higher than the water level 12b outside, the water will run naturally back into the sea outside at the level 12b, see the description to the right in figure 8. This means that water is pumped up into the cage so that the level stays at the higher height as indicated.

## Claims

1. Method for operation of a closed cage for marine organisms in the sea, where the cage is defined by a watertight cloth (14) that is fastened in a floating anchoring ring (20) on the sea surface, as the cage is supplied with new water by pumping it in from the sea and water is let back into the sea outside the cage in an overflow, where the new water is pumped up from the sea by the operation of a pump house (246) with a removable pumping body (54), wherein the cage comprises
a lower pipe part (40b) set up to extend down below the cage (10) and comprising an inlet (148) for the intake of water,
an upper pipe part (40a) set up to extend upwards above the surface of the water (12a) in the cage as the upper pipe part comprises an outlet (48) for the water that is pumped up from the sea below the cage, and
a middle section that connects the upper (40a) and the lower pipe part (40b), respectively, and comprises a bracket (42) for anchoring to the bottom section of the cage; wherein
the upper pipe part (40a) is divided into at least two mutually duct-forming, parallel pipe parts (46a,46b) with associated, radially directed outlets (48b) for the bringing of the water by pump houses (246) inserted in the respective parallel pipe parts (46a,46b) out into the cage, said outlets (48b) facing mutually radially opposite out into the cage, and
water is let out via an overflow through a number of ducts (80,82) that are formed in the anchoring ring (20) from the inside (12a) of the cage into the sea (12b) on the outside of the anchoring ring (20).

2. Method according to claim 1, where the water is led up through the pump house (246) and out into the cage in a radial direction some distance above the bottom of the cage, through a radially arch shaped directed outlet (48a) from the pump house (246) that is level with a correspondingly formed opening (48b) in the pipe-formed body (40a).

3. Method according to any one of claims 1-2, where the water in the cage is forced into a rotary movement in that the new water out from the pump house (246) and the pipe (40) is led towards arch-shaped guiding plates (56A 56B) fitted at the outlet (48b) from the pipe (40a).

4. Method according to any one of claims 2-3, where the new water is pumped upwards through two or more mutually parallel pump houses (246) with pumping bodies (54) arranged in respective guiding pipes (46a,46b) each containing their respective pump house (246) and is led out into the cage in the radially opposite directions.

5. Method according to one of the preceding claims, where during operation of the cage the water level (12a) in the cage is held at a level higher than the water level (12b) outside the cage, as the water is let out via an overflow through the overflow ducts (80,82) that are placed across through the anchoring ring that encompasses the ring-formed float (20).

6. Method according to claim 4, where each pump house (246) comprises one or more chambers (57) with buoyancy members, such as air or lightweight foam, so that the pump house has an approximate neutral weight or negative buoyancy in its associated guiding pipe (40a).

7. Method according to claim 4, where each pump house (246) is set up to be mounted suspended on a line with the help of a winch for lowering in its respective guiding pipe (40a) that runs upwards to the sea surface.

8. Method according to one of the preceding claims, where the pump housing (246) is lowered down until it rests on a shoulder-formed receiving seat (247) in the upper pipe part (40a), whereupon the pumping body (54) is started so that the whole house (246) turns/rotates freely on the seat (247) until it meets a stopping body that rotary locks the house, in said position the outlet (48a) from the pump housing (246) is level with the outlet opening (48b) in one of the parallel pipe parts (46a,46b) lying outside.

9. Construction in combination with a cage for marine organisms in the sea, the construction being for supply of water to the cage, where the cage is defined by a watertight cloth (14) that is fastened to a floating anchoring ring (20) on the sea surface, as the cage is supplied with water by the pumping in from the sea by a pump and water is let back into the sea outside the cage via an overflow, wherein the construction comprises
a pump house (246) with a removable pumping body 54) for pumping up the new water from the sea,
a lower pipe part (40b) set up to extend down below the cage (10) and comprising an inlet (148) for the intake of water,
an upper pipe part (40a) set up to extend upwards above the surface of the water (12a) in the cage as the upper pipe part comprises an outlet (48) for the water that is pumped up from the sea below the cage, and
a middle section that connects the upper (40a) and the lower pipe part (40b), respectively, and comprises a bracket (42) for anchoring to the bottom section of the cage; said construction in combination with the cage being **characterized in that**
the upper pipe part (40a) is divided into at least two mutually duct-forming, parallel pipe parts (46a,46b) with associated, radially directed outlets (48b) for the bringing of the water by pump houses inserted in the respective parallel pipe parts (46a,46b) out into the cage, said outlets (48b) facing mutually radially opposite out into the cage, and
water is let out via an overflow through a number of ducts (80,82) that are formed in the anchoring ring (20) from the inside (12a) of the cage into the sea (12b) on the outside of the anchoring ring (20).

10. Construction according to claim 9, where the pump house (246) is divided into three parts:
1) an upper chamber part (57) that acts as a float chamber and also a body for connection of a hoisting line (43) that is operated by a winch on the sea surface to hoist/lower the pump housing (246),
2) a middle part that defines an arch-shaped pipe bend (47) that is set up to turn with its opening (48a) facing radially outwards, and also a downward open pipe part that is level with the downstream outlet from a pumping body (54), and
3) a pump section with the pumping body (54) and a downward open channel for fluid connection towards the lower pipe part (40b).

11. Construction according to any one of claims 9-10, where the bracket (18) that connects the upper (40a) and lower (40b) pipe parts comprises a box-formed collective container (42) that forms a fastening point for the bottom part of the cage cloth, one or more chambers (145) with associated downpipe channels (45) for waste, and also a waste line (50) to lead waste to the surface and possibly to a buoyancy chamber (147).

12. Construction according to any one of claims 9-11, where the lower pipe part (40b) is a pipe-formed flexible cloth that comprises, at the bottom, a weight (146) and the cloth pipe (40b) is held taut with the help of a number of plastic or metal rings (149) fitted mutually spaced apart internally in, or externally on, the cloth pipe (40b), and also an inlet grid.

13. Construction according to any one of claims 9-12, where the top side of the bracket (143) forms an inclining, ring forming shelf surface that is aligned with the downwardly arch-formed inside of the cage cloth (141b) so that it forms a naturally tilting duct towards the downpipe channels centre for the descending waste.

## Patentansprüche

1. Verfahren zum Betrieb eines geschlossenen Käfigs für Meeresorganismen im Meer, wobei der Käfig durch ein wasserdichtes Tuch (14) begrenzt ist, das in einem schwimmenden Verankerungsring (20) auf der Meeresoberfläche befestigt ist, wobei der Käfig mit neuem Wasser versorgt wird, indem es aus dem Meer hineingepumpt wird, und Wasser ins Meer außerhalb des Käfigs in einem Überlauf zurückgeleitet wird, wobei das neue Wasser durch den Betrieb eines Pumpenhauses (246) mit einem abnehmbaren Pumpenkörper (54) aus dem Meer hochgepumpt wird, wobei der Käfig umfasst:
ein unteres Rohrteil (40b), das so eingerichtet ist, dass es sich unterhalb des Käfigs (10) nach unten erstreckt und einen Einlass (148) zum Ansaugen von Wasser umfasst,
ein oberes Rohrteil (40a), das so eingerichtet ist, dass es sich oberhalb der Wasseroberfläche (12a) in dem Käfig nach oben erstreckt, wobei das obere Rohrteil einen Auslass (48) für das Wasser umfasst, das aus dem Meer unterhalb des Käfigs hochgepumpt wird, und
einen mittleren Abschnitt, der jeweils das obere (40a) und das untere Rohrteil (40b) miteinander verbindet, und eine Halterung (42) zur Verankerung an dem unteren Abschnitt des Käfigs umfasst; wobei
das obere Rohrteil (40a) in mindestens zwei gegenseitig kanalbildende, parallele Rohrteile (46a, 46b) mit zugehörigen, radial gerichteten Auslässen (48b) unterteilt ist zum Einbringen des Wassers durch in die jeweiligen parallelen Rohrteile (46a, 46b) eingesetzte Pumpengehäuse (246) nach außen in den Käfig, wobei die Auslässe (48b) zueinander radial entgegengesetzt nach außen in den Käfig weisen, und
Wasser über einen Überlauf durch eine Anzahl von Kanälen (80, 82), die in dem Verankerungsring (20) ausgebildet sind, aus dem Inneren (12a) des Käfigs in das Meer (12b) an der Außenseite des Verankerungsrings (20) herausgelassen wird.

2. Verfahren nach Anspruch 1, wobei das Wasser durch das Pumpenhaus (246) nach oben und in einer radialen Richtung in einigem Abstand oberhalb des Bodens des Käfigs durch einen radial bogenförmigen, gerichteten Auslass (48a), der auf gleicher Höhe mit einer entsprechend geformten Öffnung (48b) in dem rohrförmig ausgebildeten Körper (40a) ist, aus dem Pumpenhaus (246) in den Käfig herausgeleitet wird.

3. Verfahren nach einem der Ansprüche 1-2, wobei das Wasser in dem Käfig in eine Drehbewegung gezwungen wird, indem das neue Wasser aus dem Pumpenhaus (246) und dem Rohr (40) in Richtung bogenförmiger Führungsplatten (56A, 56B) geleitet wird, die am Auslass (48b) von dem Rohr (40a) angebracht sind.

4. Verfahren nach einem der Ansprüche 2 bis 3, wobei das neue Wasser durch zwei oder mehr zueinander parallele Pumpenhäuser (246) mit Pumpenkörpern (54), die in jeweiligen Führungsrohren (46a, 46b) angeordnet sind, die ihr jeweiliges Pumpenhaus (246) enthalten, nach oben gepumpt und in den Käfig in den radial entgegengesetzten Richtungen herausgelassen wird.

5. Verfahren nach einem der vorherigen Ansprüche, wobei während des Betriebs des Käfigs der Wasserstand (12a) in dem Käfig auf einem höheren Stand als der Wasserstand (12b) außerhalb des Käfigs gehalten wird, während das Wasser über einen Überlauf mittels der Überlaufkanäle (80, 82) herausgelassen wird, die quer durch den Verankerungsring angeordnet sind, der den ringförmigen Schwimmer (20) umschließt.

6. Verfahren nach Anspruch 4, wobei jedes Pumpenhaus (246) eine oder mehrere Kammern (57) mit Auftriebskörpern, wie Luft oder Leichtschaum, umfasst, sodass das Pumpenhaus in seinem zugehörigen Führungsrohr (40a) ein annähernd neutrales Gewicht oder einen negativen Auftrieb aufweist.

7. Verfahren nach Anspruch 4, wobei jedes Pumpenhaus (246) eingerichtet ist, um mit Hilfe einer Winde an einer Leine hängend zum Absenken in seinem jeweiligen Führungsrohr (40a), das nach oben zur Meeresoberfläche verläuft, angebracht zu werden.

8. Verfahren nach einem der vorherigen Ansprüche, wobei das Pumpengehäuse (246) abgesenkt wird, bis es auf einem schulterförmigen Aufnahmesitz (247) in dem oberen Rohrteil (40a) ruht, woraufhin der Pumpenkörper (54) in Gang gesetzt wird, sodass sich das gesamte Gehäuse (246) auf dem Sitz (247) frei dreht, bis es auf einen Anschlagkörper trifft, der das Gehäuse drehbar verriegelt, wobei in dieser Position der Auslass (48a) aus dem Pumpengehäuse (246) mit der Auslassöffnung (48b) in einem der außen liegenden parallelen Rohrteile (46a, 46b) auf gleicher Höhe ist.

9. Konstruktion in Kombination mit einem Käfig für Meeresorganismen im Meer, wobei die Konstruktion für die Wasserversorgung des Käfigs ist,
wobei der Käfig durch ein wasserdichtes Tuch (14) begrenzt ist, das an einem schwimmenden Verankerungsring (20) auf der Meeresoberfläche befestigt ist, wobei der Käfig durch das Hereinpumpen aus dem Meer durch eine Pumpe mit Wasser versorgt wird und Wasser ins Meer außerhalb des Käfigs über einen Überlauf zurückgeleitet wird, wobei die Konstruktion umfasst:
ein Pumpenhaus (246) mit einem abnehmbaren Pumpenkörper (54) zum Hochpumpen des neuen Wassers aus dem Meer,
ein unteres Rohrteil (40b), das so eingerichtet ist, dass es sich unterhalb des Käfigs (10) nach unten erstreckt und einen Einlass (148) zum Ansaugen von Wasser umfasst,
ein oberes Rohrteil (40a), das so eingerichtet ist, dass es sich oberhalb der Wasseroberfläche (12a) in dem Käfig nach oben erstreckt, wobei das obere Rohrteil einen Auslass (48) für das Wasser umfasst, das aus dem Meer unterhalb des Käfigs hochgepumpt wird, und
einen mittleren Abschnitt, der jeweils das obere (40a) und das untere Rohrteil (40b) miteinander verbindet, und eine Halterung (42) zur Verankerung an dem unteren Abschnitt des Käfigs umfasst; wobei die Konstruktion in Kombination mit dem Käfig **dadurch gekennzeichnet ist, dass**
das obere Rohrteil (40a) in mindestens zwei gegenseitig kanalbildende, parallele Rohrteile (46a, 46b) mit zugehörigen, radial gerichteten Auslässen (48b) unterteilt ist zum Einbringen des Wassers durch in die jeweiligen parallelen Rohrteile (46a, 46b) eingesetzte Pumpengehäuse nach außen in den Käfig, wobei die Auslässe (48b) zueinander radial entgegengesetzt nach außen in den Käfig weisen, und
Wasser über einen Überlauf durch eine Anzahl von Kanälen (80, 82), die in dem Verankerungsring (20) ausgebildet sind, aus dem Inneren (12a) des Käfigs in das Meer (12b) an der Außenseite des Verankerungsrings (20) herausgelassen wird.

10. Konstruktion nach Anspruch 9, wobei das Pumpenhaus (246) in drei Teile unterteilt ist:
1) einen oberen Kammerteil (57), das als Schwimmerkammer und auch einen Körper für den Anschluss einer Hebeleine (43) dient, die mittels einer Winde an der Meeresoberfläche betrieben wird, um das Pumpengehäuse (246) zu heben/zu senken,
2) einen Mittelteil, das einen bogenförmigen Rohrbogen (47), der so eingerichtet ist, dass er sich mit seiner Öffnung (48a) radial nach außen gerichtet dreht, und auch einen nach unten offenen Rohrteil definiert, der mit dem stromabwärtigen Auslass von einem Pumpenkörper (54) auf gleicher Höhe liegt, und
3) einen Pumpenabschnitt mit dem Pumpenkörper (54) und einem nach unten offenen Kanal zur Fluidverbindung zu dem unteren Rohrteil (40b).

11. Konstruktion nach einem der Ansprüche 9-10, wobei die Halterung (18), die das obere (40a) und untere (40b) Rohrteil verbindet, einen kastenförmigen Sammelbehälter (42), der einen Befestigungspunkt für den unteren Teil des Käfigtuchs bildet, eine oder mehrere Kammern (145) mit zugehörigen Fallrohrkanälen (45) für Abfälle sowie eine Abfallleitung (50) umfasst, um Abfall an die Oberfläche und unter Umständen zu einer Auftriebskammer (147) zu leiten.

12. Konstruktion nach einem der Ansprüche 9-11, wobei das untere Rohrteil (40b) ein rohrförmiges, flexibles Tuch ist, das am Boden ein Gewicht (146) umfasst und das Tuchrohr (40b) mit Hilfe einer Anzahl von Kunststoff- oder Metallringen (149), die in gegenseitigem Abstand innen im oder außen am Tuchrohr (40b) angebracht sind, sowie eines Einlassgitters gespannt gehalten wird.

13. Konstruktion nach einem der Ansprüche 9-12, wobei die Oberseite der Halterung (143) eine geneigte, ringförmige Ablagefläche bildet, die zu der nach unten gewölbten Innenseite des Käfigtuchs (141b) ausgerichtet ist, sodass sie einen natürlich kippenden Kanal in Richtung der Fallrohrkanalmitte für den fallenden Abfall bildet.

## Revendications

1. Procédé d'actionnement d'une cage fermée pour des organismes marins en mer, dans lequel la cage est définie par un tissu étanche à l'eau (14) qui est fixé dans un anneau d'ancrage flottant (20) sur la surface de la mer lorsque la cage est alimentée en eau neuve en la pompant dans celle-ci à partir de la mer et l'eau étant rejetée dans la mer à l'extérieur de la cage dans un trop-plein, dans lequel l'eau neuve est pompée à partir de la mer par l'actionnement d'un poste de pompage (246) avec un corps de pompage amovible (54), dans lequel la cage comprend :
une partie inférieure de tuyau (40b) ajustée de sorte à s'étendre vers le bas au-dessous de la cage (10) et comprenant une entrée (148) pour l'admission d'eau ;
une partie supérieure de tuyau (40a) ajustée de sorte à s'étendre vers le haut au-dessus de la surface de l'eau (12a) dans la cage, lorsque la partie supérieure du tuyau comprenant une sortie (48) pour l'eau pompée à partir de la mer au-dessous de la cage ; et
une section médiane qui connecte respectivement la partie supérieure du tuyau (40a) et la partie inférieure du tuyau (40b), et qui comprend une console (42) en vue d'un ancrage sur la section inférieure de la cage ; dans lequel :
la partie supérieure du tuyau (40a) est divisée en au moins deux parties de tuyau (46a, 46b) mutuellement parallèles formant un conduit, avec des sorties associées à direction radiale (48b) pour l'apport de l'eau par des postes de pompage (246) insérés dans les parties de tuyau parallèles respectives (46a, 46b) dans la cage, lesdites sorties (48b) étant orientées de manière mutuellement opposée dans la direction radiale dans la cage ; et
l'eau est évacuée par l'intermédiaire d'un trop-plein à travers plusieurs conduits (80, 82) qui sont formés dans l'anneau d'ancrage (20), de l'intérieur (12a) de la cage dans la mer (12b) sur l'extérieur de l'anneau d'ancrage (20).

2. Procédé selon la revendication 1,
dans lequel l'eau est amenée à travers le poste de pompage (246) et dans la cage dans une direction radiale à une certaine distance au-dessus du fond de la cage, à travers une sortie à direction radiale en forme d'arc (48a) à partir du poste de pompage (246) qui se situe à niveau avec une ouverture de forme correspondante (48b) dans le corps en forme de tuyau (40a).

3. Procédé selon l'une quelconque des revendications 1 à 2, dans lequel l'eau dans la cage est entraînée en un mouvement rotatif, dans lequel l'eau neuve sortant du poste de pompage (246) et du tuyau (40) étant amenée vers des plaques de guidage en forme d'arc (56A, 56B) ajustées au niveau de la sortie (48b) du tuyau (40a).

4. Procédé selon l'une quelconque des revendications 2 à 3, dans lequel l'eau neuve est pompée vers le haut à travers deux ou plusieurs postes de pompage mutuellement parallèles (246) avec des corps de pompage (54) agencés dans des tuyaux de guidage respectifs (46a, 46b), contenant chacun son poste de pompage respectif (246) et est évacuée dans la cage dans des directions radialement opposées.

5. Procédé selon l'une des revendications précédentes, dans lequel, au cours du fonctionnement de la cage, le niveau de l'eau (12a) dans la cage est maintenu à un niveau supérieur au niveau de l'eau (12b) à l'extérieur de la cage, lors de l'évacuation de l'eau par l'intermédiaire d'un trop-plein à travers les conduits de trop-plein (80, 82) qui sont disposés à travers l'anneau d'ancrage entourant le flotteur de forme annulaire (20).

6. Procédé selon la revendication 4, dans lequel chaque poste de pompage (246) comprend une ou plusieurs chambres (57) avec des éléments de flottabilité, par exemple de l'air ou de la mousse légère, de sorte que le poste de pompage a un poids neutre approximatif ou une flottabilité négative dans son tuyau de guidage associé (40a).

7. Procédé selon la revendication 4, dans lequel chaque poste de pompage (246) est ajusté de sorte à être monté en suspension sur une ligne par l'intermédiaire d'un treuil en vue de l'abaissement dans son tuyau de guidage respectif (40a) qui s'étend vers le haut vers la surface de la mer.

8. Procédé selon l'une des revendications précédentes, dans lequel le poste de pompage (246) est abaissé jusqu'à ce qu'il repose sur un siège de réception en forme d'épaulement (247) dans la partie supérieure du tuyau (40a), le corps de pompage (54) étant ensuite démarré de sorte que l'ensemble du poste (246) tourne/pivote librement sur le siège (247) jusqu'à ce qu'il rencontre un corps d'arrêt verrouillant en rotation le poste, la sortie (48a) du poste de pompage (246) étant dans ladite position à niveau avec l'ouverture de sortie (48b) dans l'une des parties parallèles du tuyau (46a, 46b) se situant à l'extérieur.

9. Construction en combinaison avec une cage pour des organismes marins en mer, la construction étant destinée à assurer l'alimentation en eau de la cage, la cage étant définie par un tissu étanche à l'eau (14) qui est fixé sur un anneau d'ancrage flottant (20) sur la surface de la mer lorsque la cage est alimentée en eau par le pompage de celle-ci à partir de la mer par une pompe et l'eau étant rejetée dans la mer à l'extérieur de la cage par l'intermédiaire d'un trop-plein, dans laquelle la construction comprend :
un poste de pompage (246) avec un corps de pompage amovible (54) pour pomper de l'eau neuve à partir de la mer ;
une partie inférieure de tuyau (40b) ajustée de sorte à s'étendre vers le bas au-dessous de la cage (10) et comprenant une entrée (148) pour l'admission de l'eau ;
une partie supérieure de tuyau (40a) ajustée de sorte à s'étendre vers le haut au-dessus de la surface de l'eau (12a) dans la cage, lorsque la partie supérieure du tuyau comprenant une sortie (48) pour l'eau qui est pompée à partir de la mer au-dessous de la cage ; et
une section médiane qui connecte respectivement la partie supérieure (40a) et la partie inférieure (40b) du tuyau, et qui comprend une console (42) en vue d'un ancrage sur la section inférieure de la cage ; ladite construction en combinaison avec la cage étant **caractérisée en ce que** :
la partie supérieure du tuyau (40a) est divisée en au moins deux parties de tuyau mutuellement parallèles formant un conduit (46a, 46b) avec des sorties à direction radiale associées (48b) pour l'apport de l'eau par des postes de pompage insérés dans les parties de tuyau parallèles respectives (46a, 46b) dans la cage, lesdites sorties (48b) étant orientées de manière mutuellement opposée dans la direction radiale dans la cage ; et
l'eau est évacuée par l'intermédiaire d'un trop-plein à travers un certain nombre de conduits (80, 82) qui sont formés dans l'anneau d'ancrage (20) à partir de l'intérieur (12a) de la cage dans la mer (12b) sur l'extérieur de l'anneau d'ancrage (20).

10. Construction selon la revendication 9, dans laquelle le poste de pompage (246) est divisé en trois parties :
1) une partie de chambre supérieure (57) agissant comme une chambre flottante et également comme un corps pour la connexion d'un câble de levage (43) actionné par un treuil sur la surface de la mer pour lever/abaisser le poste de pompage (246) ;
2) une partie médiane qui définit un coude de tuyau en forme d'arc (47) ajustée de sorte à tourner avec son ouverture (48a) orientée radialement vers l'extérieur, et également une partie de tuyau ouverte vers le bas qui se situe à niveau avec la sortie en aval d'un corps de pompage (54) ; et
3) une section de pompe avec le corps de pompage (54) et un canal ouvert vers le bas en vue d'une connexion fluidique vers la partie inférieure du tuyau (40b).

11. Construction selon l'une quelconque des revendications 9 à 10, dans laquelle la console (18) qui connecte la partie supérieure (40a) et la partie inférieure (40b) du tuyau comprend un conteneur collectif en forme de boîte (42) qui établit un point de fixation pour la partie inférieure du tissu de la cage, une ou plusieurs chambres (145) avec des canaux à tuyau de descente (45) pour les déchets, ainsi qu'un conduit d'évacuation (50) pour guider les déchets vers la surface et éventuellement vers une chambre de flottabilité (147).

12. Construction selon l'une quelconque des revendications 9 à 11, dans laquelle la partie inférieure du tuyau (40b) est constituée par un tissu souple en forme de tuyau qui comprend, au niveau de son fond, un poids (146), et le tissu en forme de tuyau (40b) est maintenu en tension à l'aide d'un certain nombre d'anneaux métalliques ou en plastique (149) ajustés mutuellement de manière espacée à l'intérieur du, ou à l'extérieur sur le tissu en forme de tuyau (40b), ainsi qu'une grille d'entrée.

13. Construction selon l'une quelconque des revendications 9 à 12, dans laquelle le côté supérieur de la console (143) forme une surface de plate-forme inclinée à formation d'un anneau, qui est alignée avec l'intérieur en forme d'arc disposé vers le bas du tissu de la cage (141b), de sorte à former un conduit à inclinaison naturelle vers le centre des canaux à tuyau de descente pour les déchets descendants.
